# DEMANDE DE BREVET EUROPEEN

(11) **EP 0 962 996 A1**
(43) Date de publication de la demande: **08.12.1999**
(21) Numéro de dépôt: 99401071.8
(22) Date de dépôt: 03.05.1999
(51) Int. Cl.: H01M 2/30, H01M 2/20, H01M 2/10

(54) **Borne de sortie de courant pour un module de générateurs cylindriques juxtaposés**

(30) Priorité: 14.05.1998 FR 9806085
(71) Demandeur: ALCATEL, 75008 Paris (FR)
(72) Inventeur: Fradin, Jean, 86240 Fontaine le Comte (FR); Souliac, Laurent, 86280 Saint Benoit (FR)
(74) Mandataire: Laroche, Danièle

(57) **Abrégé**

Une borne de sortie (6) de courant pour un module comprenant des générateurs cylindriques (3) juxtaposés définissant un plan axial passant par leurs axes de symétrie respectif et un plan transversal perpendiculaire auxdits axes, caractérisée en ce qu'elle est constituée d'une barrette (10) conductrice plane émergeant de la face supérieure dudit module dans une direction parallèle audit plan transversal et étant pliée à 90°C dans une direction parallèle audit plan axial, son extrémité (6) étant dirigée vers le centre dudit module afin de se placer dans un espace (13) délimité par une partie de la surface cylindrique desdits générateurs, ledit espace étant contenu à l'intérieur du volume-enveloppe (2) dudit module défini par le parallélépipède rectangle dans lequel s'inscrit l'empilage desdits générateurs, et en ce que ladite extrémité de ladite barrette porte un orifice (7) lisse traversant l'épaisseur de ladite barrette et coopérant avec un filetage (9) fixe.

## Description

La présente invention concerne un borne de sortie de courant pour un module comprenant des générateurs cylindriques juxtaposés. Elle s'étend en outre à la batterie comprenant cette borne.

Ces générateurs de forme cylindrique sont notamment destinés au couple électrochimique lithium-ion. Plusieurs générateurs sont juxtaposés pour former un ensemble appelé module. Ces modules sont à leur tour susceptibles d'être raccordés électriquement pour former une batterie. Il s'agit par exemple de modules assemblés en batterie utilisable comme moyen de traction dans un véhicule électrique.

Chacun des générateurs possède au moins une sortie de courant placée de manière commode sur la face transversale circulaire du cylindre. Ces sorties de courant individuelles sont reliées entre elles selon le schéma électrique retenu qui aboutit à une borne constituant la sortie de courant du module. Cette borne se trouve naturellement dans le prolongement des liaisons entre les sorties individuelles.

Une borne émergeant à l'extérieur du module sans protection suffisante peut être mise accidentellement en court-circuit par contact avec une pièce métallique, court-circuit qui se répercute immédiatement aux générateurs. Il est donc indispensable de munir la borne d'un capot de protection.

La borne est elle-même reliée à une connexion extérieure au module, par exemple pour l'assemblage des modules en batterie. Si on souhaite fixer cette connexion extérieure de manière amovible, par exemple à l'aide d'une vis, le volume de l'extrémité de la borne doit être suffisant pour pouvoir y ménager un trou fileté.

Pour les raisons ci-dessus la borne constitue un volume supplémentaire qui vient s'ajouter à l'encombrement du module, ce qui est très pénalisant dans certaines applications où le volume attribué à la batterie est le plus faible possible.

La présente invention a pour but de proposer une borne de sortie de courant pour un module comprenant des générateurs cylindriques juxtaposés dont l'encombrement est réduit.

L'objet de la présente invention est une borne de sortie de courant pour un module comprenant des générateurs cylindriques juxtaposés définissant un plan axial passant par leurs axes de symétrie respectif et un plan transversal perpendiculaire auxdits axes, caractérisée en ce qu'elle est constituée d'une barette conductrice plane émergeant de la face supérieure dudit module dans une direction parallèle audit plan transversal et étant pliée à 90°C dans une direction parallèle audit plan axial, son extrémité étant dirigée vers le centre dudit module afin de se placer dans un espace délimité par une partie de la surface cylindrique desdits générateurs, ledit espace étant contenu à l'intérieur du volume-enveloppe dudit module défini par le parallélépipède rectangle dans lequel s'inscrit l'empilage desdits générateurs, et en ce que ladite extrémité de ladite barrette porte un orifice lisse traversant l'épaisseur de ladite barrette et coopérant avec un filetage fixe.

La borne selon la présente invention a comme avantage de ne pas dépasser du volume-enveloppe défini par la batterie elle-même. La borne peut en outre être protégée par un capot qui s'inscrit également dans ce volume-enveloppe. La borne de sortie de courant selon l'invention met le dispositif à l'abri des agressions mécaniques extérieures.

Il est avantageux de prévoir un mode de fixation qui soit réversible, par exemple s'il s'avère nécessaire de changer l'un des modules. Selon l'invention l'extrémité de ladite barette porte un orifice lisse traversant l'épaisseur de ladite barette et coopérant avec un filetage fixe. L'axe de l'orifice est perpendiculaire aux plus grande face de la barette, ainsi l'épaisseur de la barette ne dépend pas de la dimension de l'orifice. En outre l'orifice n'étant pas lui-même fileté, la connexion n'est pas fixée sur la paroi interne de l'orifice et la résistance mécanique de la portion de barette entourant l'orifice est peu sollicitée.

De préférence ledit filetage est solidaire dudit module. Une pièce rapportée peut être soudée sur la paroi du module ou bien le filetage peut être formé dans la paroi même.

Selon une première variante ledit filetage est un écrou. La connexion extérieure est alors fixée à l'aide d'une vis qui passe à travers l'orifice lisse pour être fixée dans l'écrou.

Selon une deuxième variante ledit filetage est une vis. La vis traverse l'orifice lisse et la connexion extérieure y est fixée à l'aide d'un écrou.

Selon une forme d'exécution de l'invention, ladite barette est constituée par le prolongement d'une barette connectée électriquement à au moins un desdits générateurs. Les générateurs sont reliés électriquement entre eux suivant un schéma électrique donné. Cette liaison est avantageusement réalisée à l'aide de barettes planes rigides de faible épaisseur fixées, par exemple à l'aide d'une vis, sur des bornes de sortie de courant individuelles portées par la face circulaire transversale de chaque générateur.

La présente invention a aussi pour objet un module comprenant au moins deux générateurs cylindriques juxtaposés muni d'une telle borne. Il s'agit plus particulièrement d'un module de générateurs destinés au couple électrochimique lithium-ion fournissant une énergie de l'ordre de 1kWh. Les générateurs comprennent une électrode négative contenant une matière électrochimiquement active qui est un matériau carboné susceptible d'insérer du lithium dans sa structure choisi parmi le graphite, le coke, le noir de carbone et le carbone vitreux.

L'invention sera mieux comprise et d'autres avantages et particularités apparaîtront à la lecture de la description qui va suivre, donnée à titre non limitatif, accompagnée des dessins annexés parmi lesquels :
- la figure 1 représente le module selon l'invention comprenant six générateurs cylindriques,
- la figure 2 est une vue frontale partielle, dans la direction perpendiculaire au plan ABCD, du module de la figure 1 après enlèvement des capots d'extrémité,
- la figure 3 est une coupe partielle selon III-III du module de la figure 1 montrant une borne selon l'invention constituée par le prolongement d'une barette connectée à l'un au moins des générateurs,
- la figure 4 est une vue partielle de dessus, dans la direction perpendiculaire au plan ABEF, du module de la figure 1.

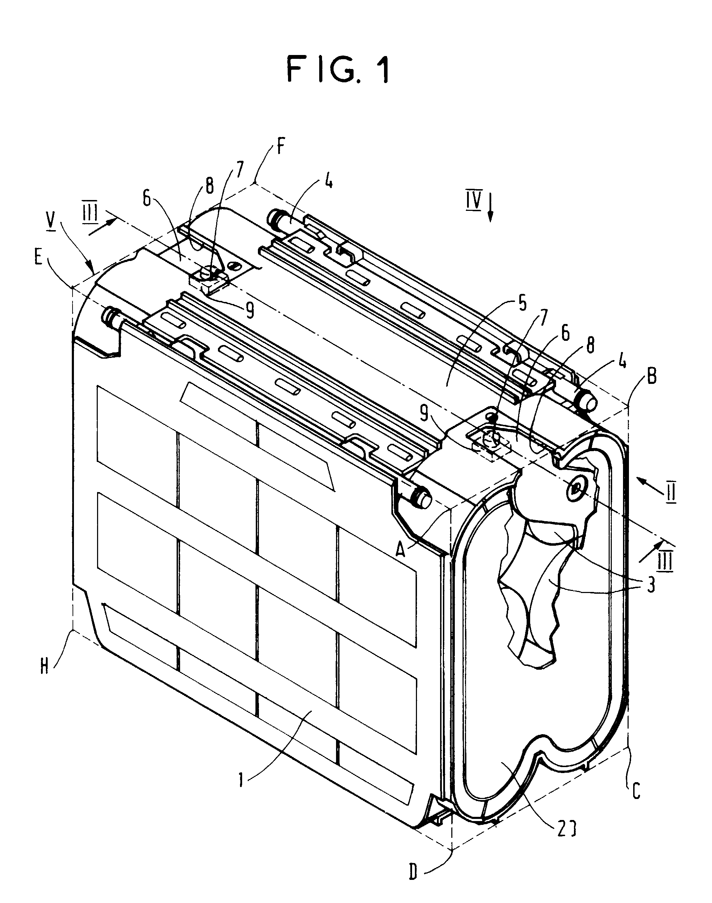

Un module selon la présente invention comportant six générateurs électrochimiques est représenté sur la figure 1. La régulation thermique des générateurs s'effectue notamment par l'intermédiaire d'un fluide caloporteur circulant dans la chemise à double paroi du module.

Ce module comprend une chemise isolante à paroi creuse à l'intérieur de laquelle circule un liquide caloporteur, et deux capots 2 en matériau isolant qui recouvrent respectivement les deux extrémités du module où les générateurs 3 dépassent de la chemise 1. La chemise est munie de tubulures 4 pour l'entrée ou la sortie du liquide. Ces tubulures 4, comme l'ensemble des accessoires associés au module, sont contenues dans le volume-enveloppe V défini par le parallélépipède rectangle ABCDEFGH dans lequel s'inscrit l'empilage des cylindres.

Une plaque de protection 5 en matériau isolant recouvre la face supérieur sans dépasser du volume-enveloppe du module, protégeant la borne de sortie de courant 6. Une vis peut être introduite dans l'orifice traversant 7 pour relier une connexion extérieure à la borne 6. Une fenêtre 8 est prévue dans la plaque de protection 5 pour le passage de la vis qui va se fixer dans un écrou 9 prisonnier.

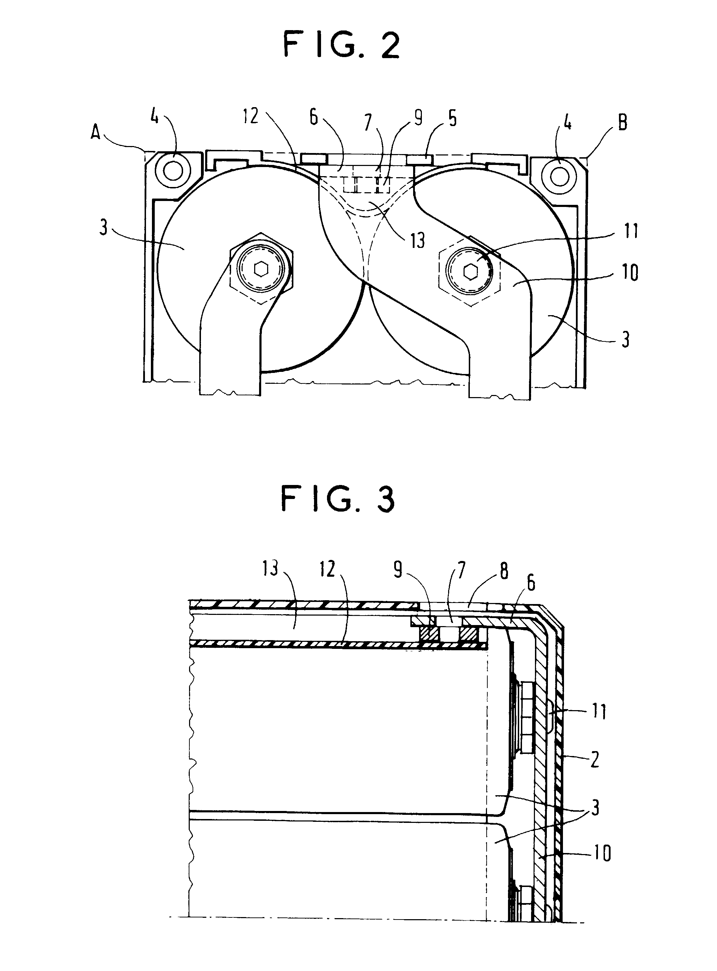

Sur la figure 2, le capot 2 a été enlevé permettant d'apercevoir, les générateurs 3 et la barette de connexion 10 dont le prolongement rabattu sur la face supérieure du module forme la borne 6. La barette 10 est électriquement reliée à la borne 11 de sortie de courant individuelle du générateur 3. L'orifice traversant 7 de la borne 6 communique avec le trou fileté de l'écrou 9 prisonnier. L'écrou 9 est par exemple fixé sur la paroi 12 du module. La borne 6 et l'écrou 9 occupe l'espace 13 laissé par la juxtaposition des deux cylindres, sans dépasser du plan supérieur du module représenté par la ligne AB.

La figure 3 montre la borne 6 constituée par le prolongement de la barette 10 connectée à l'un au moins des générateurs 3. L'extrémité de la barette 10 est rabattue à angle droit vers l'intérieur du module dans l'espace 13. La plaque de protection 5 peut ne recouvrir que la borne, mais elle peut aussi recouvrir une partie ou toute la longueur du module. Si sa longueur est suffisante, elle peut également protéger les connexions extérieures dont le parcours s'effectue dans l'espace 13 le long du module. Cette disposition permet de réaliser le raccordement électrique des modules entre eux en assurant la continuité de la protection de ces connexions.

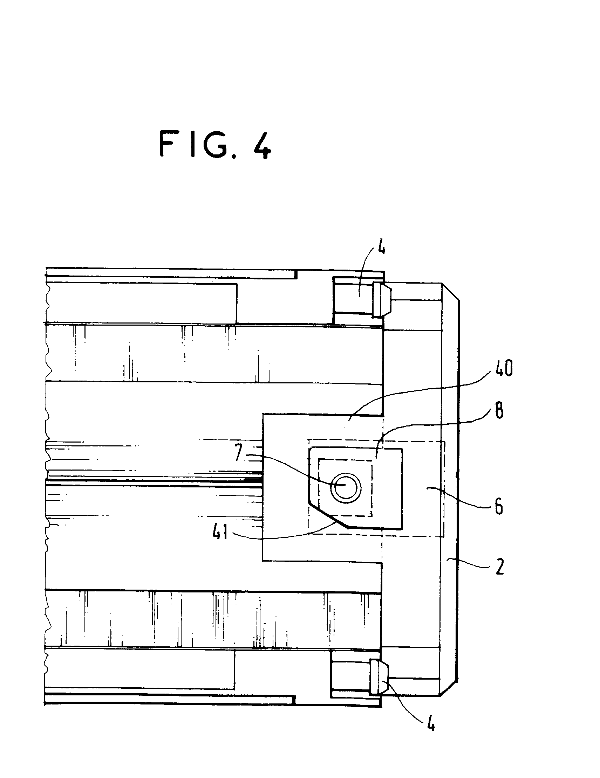

La borne 6 est vue de dessus sur la figure 4. Ici la plaque de protection 40 ne recouvre que la surface occupée par la borne 6. Une fenêtre 8 pratiquée dans la plaque 40 est munie d'un détrompeur, par exemple un pan coupé 41, afin d'éviter les inversion de polarité lors de la réalisation des modules et de leur assemblage en batterie.

## Revendications

1. Borne de sortie de courant pour un module comprenant des générateurs cylindriques juxtaposés définissant un plan axial passant par leurs axes de symétrie respectif et un plan transversal perpendiculaire auxdits axes, caractérisée en ce qu'elle est constituée d'une barrette conductrice plane émergeant de la face supérieure dudit module dans une direction parallèle audit plan transversal et étant pliée à 90°C dans une direction parallèle audit plan axial, son extrémité étant dirigée vers le centre dudit module afin de se placer dans un espace délimité par une partie de la surface cylindrique desdits générateurs, ledit espace étant contenu à l'intérieur du volume-enveloppe dudit module défini par le parallélépipède rectangle dans lequel s'inscrit l'empilage desdits générateurs, et en ce que ladite extrémité de ladite barrette porte un orifice lisse traversant l'épaisseur de ladite barrette et coopérant avec un filetage fixe.

2. Borne selon la revendication 1, dans laquelle ledit filetage est solidaire dudit module.

3. Borne selon la revendication 2, dans laquelle ledit filetage est un écrou.

4. Borne selon la revendication 2, dans laquelle ledit filetage est une vis.

5. Borne selon l'une des revendications précédentes, dans laquelle ladite barrette est constituée par le prolongement d'une barrette connectée électriquement à au moins un desdits générateurs.

6. Module comprenant au moins deux générateurs électrochimiques cylindriques juxtaposés, muni d'une borne de sortie de courant selon l'une des revendications précédentes.

7. Module selon la revendication 7, comprenant une anode contenant une matière électrochimiquement active qui est un matériau carboné susceptible d'insérer du lithium dans sa structure choisi parmi le graphite, le coke, le noir de carbone et le carbone vitreux.
